# EUROPÄISCHE PATENTSCHRIFT

(11) **EP 1 852 674 B1**
(45) Veröffentlichungstag und Bekanntmachung des Hinweises auf die Patenterteilung: **09.09.2015**
(21) Anmeldenummer: 07008380.3
(22) Anmeldetag: 25.04.2007
(51) Int. Cl.: G01B 21/16

(54) **Messvorrichtung zur Bestimmung des relativen Versatzes zwischen zwei Bauteilen**
Measuring device for determining the relative displacement between two components
Dispositif de mesure destiné à la détermination du déplacement relatif entre deux composants

(30) Priorität: 05.05.2006 DE 102006021338; 24.04.2007 DE 102007019592
(43) Veröffentlichungstag der Anmeldung: 07.11.2007
(73) Patentinhaber: Dr. Johannes Heidenhain GmbH, 83301 Traunreut (DE)
(72) Erfinder: Bock, Gerhard, 83308 Trostberg (DE); Hermann, Michael, 83342 Tacherting (DE); Holzapfel, Wolfgang, 83119 Obing (DE); Sändig, Karsten, 83349 Palling (DE); Trautner, Johannes, 83374 Traunwalchen (DE)

(56) Entgegenhaltungen:
- EP-A- 0 438 664
- FR-A1- 2 844 048
- US-A- 5 077 905
- US-A- 5 302 820
- US-B1- 6 293 680
- MAST T S ET AL: "segmented mirror control system hardware for CELT" INTERNET CITATION, [Online] 8. Mai 2000 (2000-05-08), XP002242697 Gefunden im Internet: URL:http://www.astro.caltech.edu/mirror/ce lt/reports/report00_6.pdf> [gefunden am 2000-05-08]

## Beschreibung

Die Erfindung betrifft eine Messvorrichtung, gemäß dem Anspruch 1, welche insbesondere an Spiegelsegmenten von Teleskopen einsetzbar ist.

Teleskope der neueren Generation weisen anstelle eines Einzelspiegels mehrere, bis zu einigen tausenden, meist hexagonale Spiegelsegmente auf. Alle Spiegelsegmente werden dabei in der Regel dicht gepackt in einer hexagonalen Anordnung angebracht, so dass - abgesehen von Randspiegelelementen - stets Spiegelkanten benachbarter Spiegelsegmente im lichten Abstand von etwa 1 mm parallel zueinander stehen. Damit die Teleskope ihre Abbildungsaufgabe erfüllen können, muss die Lage der Spiegelsegmente zueinander sehr genau kontrolliert werden. Segmentierte Teleskope weisen häufig eine überaus große Gesamtfläche auf und sind in der Regel im Freien installiert.

Aus der WO 2004/020953 A1 ist eine Messvorrichtung zur Bestimmung der Relativpositionen von entsprechenden Spiegelsegmenten bekannt, welche auf einem kapazitiven Wirkprinzip beruht. Dabei werden die sensitiven Elemente an den Stirnflächen der Spiegelsegmente befestigt. Derartige Messsysteme haben unter anderem den Nachteil, dass diese eine vergleichsweise geringe Messempfindlichkeit aufweisen, so dass sie für hohe Messanforderungen kaum geeignet sind. Außerdem wird die Messung erheblich durch Änderungen der Luftfeuchtigkeit und kleinsten Kondensationströpfchen beeinflusst. Weiterhin liefern diese vorbekannten Systeme in Abhängigkeit vom jeweiligen Abstand beziehungsweise Spalt zwischen benachbarten Spiegelsegmenten unterschiedliche Signalamplituden. Auch müssen bei herkömmlichen Messsystemen die Sensoren innerhalb der schmalen Spalte zwischen den Spiegelsegmenten angeordnet sein, was nur bei entsprechend großen Spalten möglich ist. Dies beeinträchtigt erheblich die optische Transferfunktion und die Güte des Teleskops.

Aus der EP 1 379 832 B1 der Anmelderin ist ein Messtaster bekannt, welcher einen Stift mit einer punktförmigen Antastgeometrie aufweist, und dessen Stift im Gehäuse des Messtasters geführt ist. Derartige Messtaster können auch nebeneinander betrieben werden. Allerdings können derartige Anordnungen keine Genauigkeit bieten, wie sie beispielsweise für die Messung des relativen Versatzes von benachbarten Spiegelsegmenten in Teleskopen notwendig ist.

US 5 077 905, XP-002242697 und US 5 302 820 offenbaren weiteren bekannte Messvorrichtungen zur Bestimmung des relativen Versatzes zwischen zwei Bauteilen.

Der Erfindung liegt die Aufgabe zu Grunde, eine Messvorrichtung der eingangs genannten Art zu schaffen, welche eine überaus exakte Bestimmung des relativen Versatzes zwischen zwei Bauteilen ermöglicht.

Diese Aufgabe wird erfindungsgemäß durch die Merkmale des Anspruches 1 gelöst.

Gemäß der Erfindung umfasst die Messvorrichtung zur Bestimmung des relativen Versatzes zwischen zwei Bauteilen in einer Richtung z einen ersten Messkörper, welcher an einem ersten Bauteil befestigbar ist, sowie einen zweiten Messkörper, welcher an einem zweiten Bauteil befestigbar ist, und eine Sensoreinrichtung zur Bestimmung der relativen Lage der beiden Messkörper. Jeweils der erste Messkörper und der zweite Messkörper ist am ersten beziehungsweise zweiten Bauteil derart befestigbar, dass Bewegungen mit einer Richtungskomponente parallel zur Richtung z von einem der Bauteile auf den daran befestigten Messkörper übertragbar sind. Dabei sind der erste Messkörper und der zweite Messkörper so gestaltet, dass der erste Messkörper winkelsteif an dem ersten Bauteil und der zweite Messkörper winkelsteif an dem zweiten Bauteil befestigbar sind. Zumindest einer der Messkörper ist so gestaltet, dass dieser in Haftkontakt mit dem ersten Bauteil oder dem zweiten Bauteil bringbar ist. Weiterhin weist die Messvorrichtung Auflager für zumindest einen Messkörper auf. Die Messvorrichtung ist dabei so konfiguriert, dass der zumindest eine Messkörper wahlweise eine Park- oder eine Betriebsposition einnehmen kann, wobei durch die Ausgestaltung der Auflager die Messkörper in der Parkposition im Raum reproduzierbar exakt zueinander ausgerichtet sind. Als zu vermessende Bauteile kommen etwa Spiegelsegmente eines Teleskops in Betracht.

Mit Vorteil weisen die Messkörper jeweils eine Längsachse auf, wobei die Längsachse des ersten Messkörpers und die Längsachse des zweiten Messkörpers eine gemeinsame Richtungskomponente in Richtung z haben, und die beiden Messkörper entlang ihrer Längsachsen relativ zueinander verschieblich sind. Die Längsachsen der beiden Messkörper sind also in bevorzugter Weise linear abhängig zueinander ausgerichtet. Insbesondere ist es vorteilhaft, wenn die Längsachsen der Messkörper parallel zueinander angeordnet sind. Die Messkörper können dabei als Stifte oder Pinolen ausgestaltet sein.

Winkelsteif bedeutet in diesem Zusammenhang, dass die betreffende Befestigung so ausgestaltet ist, dass durch Aufprägen äußerer Kräfte auf den jeweiligen Messkörper senkrecht zu dessen Längsachse Reaktionsmomente an der Befestigungsstelle erzeugbar sind.

Mit Vorteil ist die Befestigung der Messkörper an den Bauteilen so ausgestaltet, dass an der Befestigungsstelle sowohl Reaktionskräfte in allen Raumrichtungen als auch Reaktionsmomente um drei linear unabhängige Achsen durch Aufprägen äußerer Kräfte auf den jeweiligen Messkörper erzeugbar sind. Entsprechend kann mit Vorteil die Befestigung so ausgestaltet sein, dass diese einer sechswertigen Lagerung entspricht. Eine derartige Lagerung kommt dann dem mechanischen Modell der festen Einspannung gleich. Mit anderen Worten können der erste Messkörper und der zweite Messkörper so gestaltet sein, dass diese jeweils an dem ersten Bauteil beziehungsweise dem zweiten Bauteil derart befestigbar sind, dass durch die Befestigung Kräfte in allen Raumrichtungen und Momente um drei linear unabhängige Achsen, also drei jeweils zueinander orthogonal ausgerichteten Achsen, übertragbar sind. Durch diese Art der Befestigung ist keine relative Bewegung zwischen den Messkörpern und den zu messenden Bauteilen möglich, auch keine Winkelbewegung, wie dies beispielsweise bei herkömmlichen Tastern mit Kugelspitze (Abrollbewegung) möglich ist. Dies trägt wesentlich zu Erreichung der hohen Messgenauigkeit der Messvorrichtung bei. Denn jede Rutsch- oder Abrollbewegung verursacht auch bei überaus eben ausgestalteten Kontaktflächen nicht tolerierbare Messfehler.

Mit Vorteil ist zur winkelsteifen Befestigung die Kontaktfläche zwischen dem jeweiligen Messkörper und dem damit befestigten Bauteil vergleichsweise groß. Dabei können die Kontaktflächen nach unterschiedlichen Vorlagen ausgeformt sein, etwa als ebene oder hohle (konkave) Flächen. Es kann aber auch nur eine Randauflage oder eine Mehrpunktauflage, z. B. Dreipunktauflage realisiert werden.

Der erste Messkörper und / oder der zweite Messkörper ist so gestaltet, dass dieser in Haftkontakt jeweils mit dem ersten Bauteil beziehungsweise dem zweiten Bauteil bringbar ist. Zu diesem Zweck kann beispielsweise an einem Messkörper ein Permanentmagnet angeordnet sein, der beispielsweise mit einem weiteren Permanentmagneten am anderen Bauteil, oder einem ferromagnetischen Element am anderen Bauteil in der Weise zusammenwirken kann, dass eine Haftverbindung zwischen dem Messkörper und dem Bauteil entsteht. Anstelle von Permanentmagneten können mit Vorteil auch schaltbare Elektromagnete eingesetzt werden. In weiterer Ausgestaltung der Erfindung können zur Befestigung der Messkörper an dem jeweiligen Bauteil auch Vakuumhalter, etwa in Hohlräumen an den Enden der Messkörper angeordnet sein. Die Gegenfläche am entsprechenden Bauteil sollte bei dieser Variante über eine geeignete Ebenheit verfügen. Natürlich kann die Anordnung auch umgedreht werden, so dass der Vakuumhalter alternativ am besagten Bauteil vorgesehen ist. Alternativ dazu können aber auch die Messkörper über eine so genannte elektrostatische Klemmung an den betreffenden Bauteilen befestigt werden. Vorteilhaft ist in diesem Zusammengang eine bipolare elektrostatische Klemmung, bei der die elektrische Spannung nur über die Messkörper zugeführt wird. Dabei können ein Pol mit dem ersten Messkörper und der andere Pol mit dem zweiten Messkörper elektrisch verbunden sein.

Mit Vorteil sind der erste Messkörper und / oder der zweite Messkörper so gestaltet, dass der Haftkontakt durch eine Bewegung in z-Richtung des ersten beziehungsweise zweiten Bauteils lösbar ist. Diese Bewegungsrichtung kann bezüglich des betreffenden Messkörpers axial gerichtet sein. Beispielsweise kann der Haftkontakt durch eine bezüglich des betreffenden Messkörpers axiale Bewegung des ersten beziehungsweise zweiten Bauteils gelöst werden.

In einer bevorzugten Variante der Erfindung ist die Messvorrichtung so ausgestaltet, dass im Messbetrieb keine statische Überbestimmung der Messkörper vorliegt. Aus diesem Grund ist die Messvorrichtung so konfiguriert, dass zumindest ein Messkörper im Messbetrieb innerhalb der Messvorrichtung ungeführt ist. Das heißt, dass innerhalb zulässiger Bewegungstoleranzen, im Messbetrieb praktisch keine Kräfte und /oder Momente von einer Komponente der Messvorrichtung auf die Messkörper übertragen werden. Als Führung des betreffenden Messkörpers wird dann die Führung des zu messenden Bauteiles verwendet.

Die Auflager weisen häufig zwei Auflagerelementgruppen auf, wobei eine Gruppe den Messkörpern zugeordnet werden kann, während die andere Gruppe dem Gehäuse zugeordnet werden kann.

In weiterer Ausgestaltung der Erfindung weist die Messvorrichtung zur Bestimmung der relativen Lage der beiden Messkörper, und damit auch zur Bestimmung des relativen Versatzes der beiden damit befestigten Bauteile, eine optische Sensoreinrichtung mit einer Lichtquelle und einem Fotodetektor auf. Dabei kann am ersten Messkörper und am zweiten Messkörper jeweils ein strukturiertes Element befestigt sein, wobei die strukturierten Elemente von der Lichtquelle beleuchtbar sind, so dass die durch die strukturierten Elemente modulierten Lichtstrahlen vom Fotodetektor in elektrische Signale umwandelbar sind, welche von der relativen Lage der beiden Messkörper, beziehungsweise vom relativen Versatz zwischen den zwei Bauteilen, abhängen. Alternativ dazu können aber auch Sensoreinrichtungen verwendet werden, die auf einem magnetischen, induktiven oder kapazitiven Prinzip beruhen.

Gemäß einer bevorzugten Variante der Erfindung weist die Messvorrichtung ein Gehäuse auf. Dieses kann sowohl den ersten Messkörper als auch den zweiten Messkörper, aber auch die Sensoreinrichtung zumindest teilweise umgeben. Vorteilhafterweise ist das Gehäuse elektrisch leitend ausgestaltet, so dass es auch gegenüber elektromagnetischen Strahlungen abschirmend wirkt. Dabei kann ein Gehäuse aus Metall, Metallblech oder mit Metall beschichteten Kunststoffen verwendet werden. Insbesondere bei der Verwendung der Messvorrichtung in einem Teleskop ist es vorteilhaft, wenn das Gehäuse lichtdicht ausgeführt ist, insbesondere wenn eine optische Sensoreinrichtung eingesetzt wird.

In weiterer Ausgestaltung der Erfindung umfasst die Messvorrichtung ein Sensorelement, welches ein Signal abgibt, sobald zumindest ein Messkörper seine Parkposition eingenommen hat. Ein derartiges Sensorelement kann beispielsweise als eine Lichtschranke beziehungsweise Fotoelement, oder als ein Hallsensor ausgestaltet sein.

Natürlich müssen die zwei Bauteile, deren Versatz zueinander gemessen werden soll, nicht unbedingt in einer Ebene liegen. Die Messvorrichtung kann beispielsweise auch so modifiziert werden, dass die zwei Bauteile beispielsweise an einander gegenüberliegenden Seiten der Messvorrichtung angeordnet sind. Insbesondere können diejenigen Enden der Messkörper, welche für die Befestigung an dem jeweiligen Bauteil konfiguriert sind, in entgegengesetzte Richtungen weisen.

Mit Vorteil ist die Messvorrichtung so konfiguriert, dass die elektrischen Signale zur Bestimmung der relativen Lage der beiden Messkörper sowohl in der Richtung z als auch in einer weiteren zur Richtung z orthogonalen Richtung x verwendbar sind. Insbesondere kann mit Vorteil zumindest ein strukturiertes Element zwei Bereiche aufweisen, wobei die Gitterstrukturen in zumindest einem Bereich relativ zur Richtung z geneigt sind. Durch eine derartige Messvorrichtung können Messfehler, die durch Bewegungen entlang einer Richtung quer zur Richtung z herrühren eliminiert werden bzw. etwaige Fehlmessung verursacht durch Relativbewegungen der Bauteile in einer Richtung orthogonal zur Richtung z kompensiert werden.

Mit Vorteil sind die Gitterstrukturen so orientiert, dass diese eine Komponente in Richtung z aufweisen. Dabei können sämtliche Gitterstrukturen auf ein und demselben Substrat angeordnet sein und mit Vorteil innerhalb einer Ebene liegen.

Alternativ dazu können auch die Gitterstrukturen in zumindest einer geometrischen Ebene angeordnet sein, welche schief gegenüber der Richtung z im Raum liegt. Es ist vorteilhaft, wenn derartige Messvorrichtungen jeweils mit zwei Sensoreinrichtungen ausgestattet sind.

In vorteilhafter Ausgestaltung der Erfindung weisen die strukturierten Elemente zwei Bereiche auf, in denen die Gitterstrukturen komplementär orientiert sind. Unter komplementärer Orientierung ist im Folgenden zu verstehen, dass die Gitterstrukturen sowohl um einen positiven als auch um einen negativen Winkel gegenüber der Richtung z geneigt sind. Insbesondere können die zwei Bereiche symmetrisch zueinander angeordnet sein, das heißt, dass die positiven und negativen Winkel gegenüber der Richtung z den gleichen Betrag aufweisen.

In weiterer Ausgestaltung der Erfindung weist die Messvorrichtung zwei Sensoreinrichtungen auf, zur Bestimmung der relativen Lage der beiden Messkörper in Richtung z und zur Korrektur der relativen Lage im Hinblick auf einen veränderlichen Versatz der beiden Messkörper orthogonal zur Richtung z.

Mit Vorteil weisen beide Sensoreinrichtungen eine Referenzmarke auf, so dass eine Messvorrichtung entsteht, die ein absolutes zweidimensionales Messsystem darstellt. Vorteilhaft wird die Referenzmarke in Verlängerung der Messteilung, also orthogonal zur Gitterstruktur bzw. den Gitterlinien, benachbart zur Gitterstruktur für die inkrementale Wegmessung angeordnet. Dabei ist mit Vorteil die Neigung relativ zur Richtung z der Gitterstruktur der Referenzmarke gleich der Neigung der Gitterstruktur für die inkrementale Wegmessung. Auf diese Weise kann eine bidirektional stabile Referenzmarke erzeugt werden.

Gemäß einem weiteren Aspekt der Erfindung umfasst die Messvorrichtung zur Bestimmung des relativen Versatzes zwischen zwei Bauteilen in einer Richtung z einen ersten Messkörper, welcher an einem ersten Bauteil befestigbar ist, sowie einen zweiten Messkörper, welcher an einem zweiten Bauteil befestigbar ist und eine Sensoreinrichtung zur Bestimmung der relativen Lage der beiden Messkörper. Jeweils der erste Messkörper und der zweite Messkörper ist am ersten beziehungsweise zweiten Bauteil derart befestigbar, dass Bewegungen mit einer Richtungskomponente parallel zur Richtung z von einem der Bauteile auf den daran befestigten Messkörper übertragbar sind. Die Messvorrichtung weist weiterhin mindestens eine optische Sensoreinrichtung auf mit einer Lichtquelle und einem Fotodetektor zur Bestimmung der relativen Lage der beiden Messkörper. Dabei sind am ersten Messkörper und am zweiten Messkörper jeweils ein strukturiertes Element befestigt, wobei die strukturierten Elemente von der Lichtquelle beleuchtbar sind, so dass die durch die strukturierten Elemente modulierten Lichtstrahlen vom Fotodetektor in elektrische Signale umwandelbar sind, welche von der relativen Lage der beiden Messkörper abhängen. Gemäß diesem weiteren Aspekt kann eine derartige Messvorrichtung so ausgestaltet sein, dass die elektrischen Signale zur Bestimmung der relativen Lage der beiden Messkörper sowohl in der Richtung z als auch in einer weiteren zur Richtung z orthogonalen Richtung x verwendbar sind.

Insbesondere können gemäß dem weiteren Aspekt der erste Messkörper und der zweite Messkörper so gestaltet sein, dass diese jeweils an dem ersten Bauteil beziehungsweise an dem zweiten Bauteil befestigbar sind, wobei zur Korrektur der Lage im Hinblick auf einen Versatz der Bauteile orthogonal zur Richtung z der Messkörper zumindest ein strukturiertes Element mit Gitterstrukturen umfasst, welche relativ zur Richtung z geneigt sind.

Vorteilhafte Ausbildungen der Erfindung entnimmt man den abhängigen Ansprüchen.

Weitere Einzelheiten und Vorteile der erfindungsgemäßen Messvorrichtung ergeben sich aus der nachfolgenden Beschreibung von Ausführungsbeispielen anhand der beiliegenden Figuren.

Es zeigen die
- Figur 1: eine Längsschnittdarstellung durch eine erfindungsgemäße Messvorrichtung in einer Parkposition, gemäß einem ersten Ausführungsbeispiel,
- Figur 2: eine erste Querschnittdarstellung durch die erfindungsgemäße Messvorrichtung, gemäß dem ersten Ausführungsbeispiel,
- Figur 3: eine zweite Querschnittdarstellung durch die erfindungsgemäße Messvorrichtung, gemäß dem ersten Ausführungsbeispiel,
- Figur 4: eine perspektivische Ansicht der Längsschnittdarstellung durch die erfindungsgemäße Messvorrichtung in einer Parkposition, gemäß dem ersten Ausführungsbeispiel,
- Figur 5: eine Längsschnittdarstellung durch die erfindungsgemäße Messvorrichtung in einer Betriebsposition, gemäß dem ersten Ausführungsbeispiel,
- Figur 6: eine perspektivische Ansicht der Längsschnittdarstellung durch die erfindungsgemäße Messvorrichtung, in einer Betriebsposition, gemäß dem ersten Ausführungsbeispiel,
- Figur 7: eine Teilschnittdarstellung durch eine erfindungsgemäße Messvorrichtung, gemäß einem zweiten Ausführungsbeispiel,
- Figur 8: eine Schaltungsdarstellung zu dem zweiten Ausführungsbeispiel,
- Figur 9: eine Längsschnittdarstellung durch eine erfindungsgemäße Messvorrichtung in einer Betriebsposition, gemäß einem dritten Ausführungsbeispiel,
- Figur 10: eine Längsschnittdarstellung durch eine erfindungsgemäße Messvorrichtung in einer Betriebsposition, gemäß einem vierten Ausführungsbeispiel,
- Figur 11a: eine Längsschnittdarstellung durch eine erfindungsgemäße Messvorrichtung in einer Betriebsposition, gemäß einem fünften Ausführungsbeispiel,
- Figur 11b: eine Querschnittdarstellung durch eine erfindungsgemäße Messvorrichtung in einer Betriebsposition, gemäß einem fünften Ausführungsbeispiel,
- Figur 12: eine Längsschnittdarstellung durch eine erfindungsgemäße Messvorrichtung in einer Betriebsposition, gemäß einem sechstem Ausführungsbeispiel,
- Figur 13: eine Längsschnittdarstellung durch eine erfindungsgemäße Messvorrichtung in einer Betriebsposition, gemäß einem siebten Ausführungsbeispiel,
- Figur 14: eine Längsschnittdarstellung durch eine erfindungsgemäße Messvorrichtung in einer Betriebsposition, gemäß einem achten Ausführungsbeispiel,
- Figur 15: eine Längsschnittdarstellung durch eine erfindungsgemäße Messvorrichtung in einer Betriebsposition, gemäß einem neunten Ausführungsbeispiel.

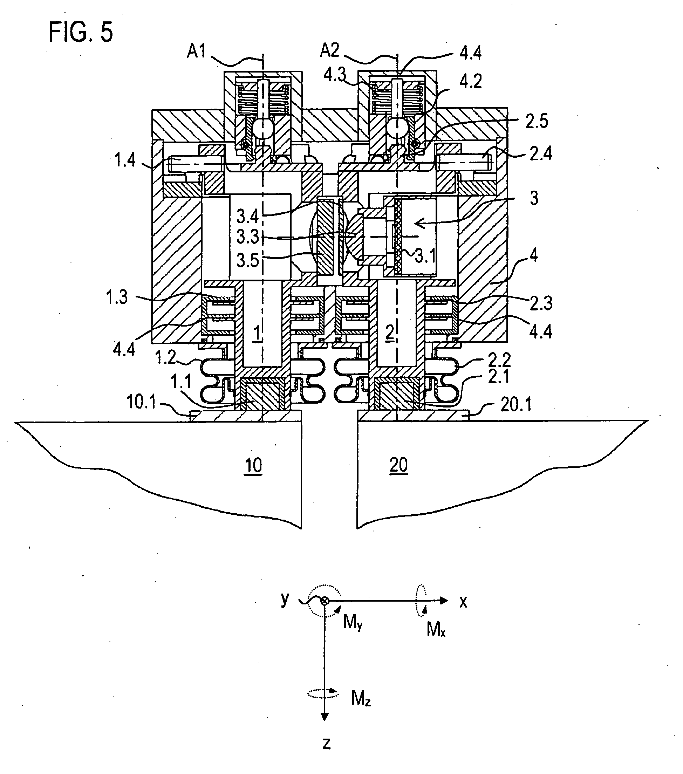

Gemäß den vorgestellten Ausführungsbeispielen dient die erfindungsgemäße Messvorrichtung zur Bestimmung des relativen Versatzes zwischen zwei benachbarten Spiegelsegmenten 10, 20 eines Teleskops, ausgehend von einem festen System, hier von einer Trägerstruktur der Spiegelsegmente 10, 20. Die Versatzmessung der zu messenden Bauteile, in den Ausführungsbeispielen die Spiegelsegmente 10, 20, erfordert bei einem derartigen Teleskop eine Auflösung und eine Genauigkeit im Nanometerbereich. Gemessen wird dabei in den vorgestellten Ausführungsbeispielen der Versatz von benachbarten hexagonalen Spiegelsegmenten 10, 20 senkrecht zur Spiegeloberfläche beziehungsweise in z-Richtung (s. Fig. 5).

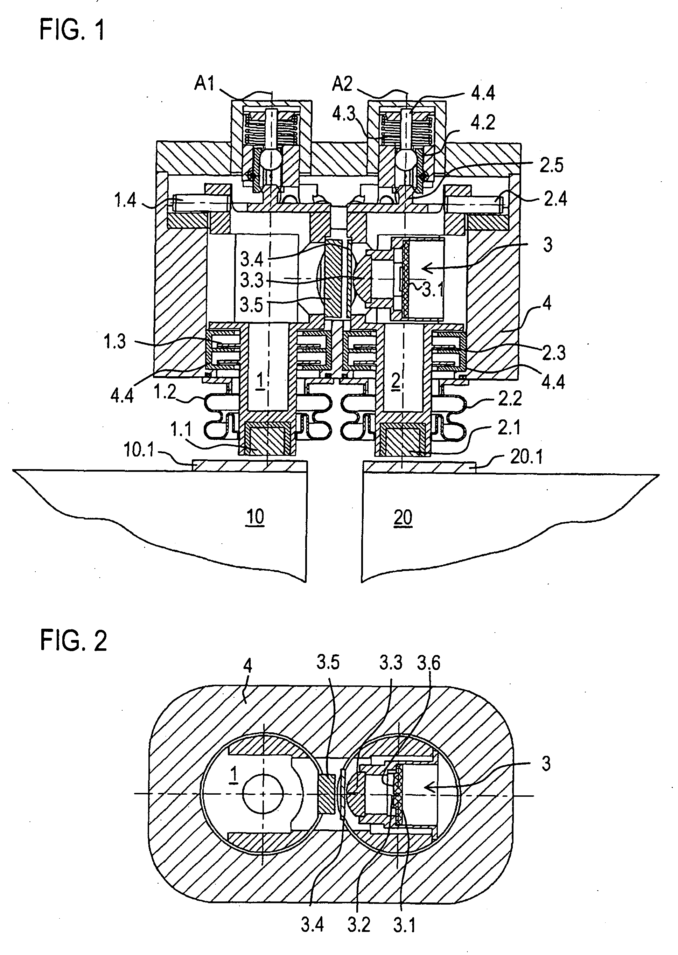

In der Figur 1 ist eine Längsschnittdarstellung durch die Messvorrichtung zur Bestimmung des relativen Versatzes zwischen dem ersten Spiegelsegment 10 und dem zweiten Spiegelsegment 20 entsprechend einem ersten Ausführungsbeispiel dargestellt. Dabei befindet sich die Messvorrichtung gemäß der Figur 1 in einer Parkposition, in welcher die Messvorrichtung von den Spiegelsegmenten 10, 20 entkoppelt ist. Wie weiter unten dargelegt, kann die Messvorrichtung wahlweise eine Park- oder eine Betriebsposition einnehmen. Jedes der Spiegelsegmente 10, 20 weist eine ferromagnetische Platte 10.1, 20.1 auf, welche an dem jeweiligen Spiegelsegment 10, 20 unverschieblich befestigt ist.

Die Messvorrichtung umfasst zwei Messkörper in Form von Stiften 1, 2 mit Längsachsen A1, A2, die parallel zueinander in einem Gehäuse 4 angeordnet sind. Das Gehäuse 4 ist hier elektrisch leitend ausgeführt, um eine gute elektrische Abschirmung zu gewährleisten. Die Stifte 1, 2 sind jeweils aus einem identischen Material hergestellt und bezüglich ihrer Kontur weitgehend gleichartig ausgebildet, so dass Umgebungseinflüsse, wie etwa die Umgebungstemperatur beziehungsweise deren Änderung, nicht zu Messfehlern führen.

Weiterhin ist im Gehäuse 4 eine Sensoreinrichtung 3 untergebracht, deren Komponenten mit dem ersten Stift 1 beziehungsweise mit dem zweiten Stift 2 verbunden sind. Im vorliegenden Ausführungsbeispiel wurde eine Sensoreinrichtung 3 gewählt, die nach einem optischen Prinzip arbeitet. Am ersten Stift 1 ist insbesondere eine Leiterplatte 3.1 fixiert, auf der unter anderem eine Lichtquelle 3.2 in Form einer LED, sowie ein Fotodetektor 3.6 (Fig. 2), ausgestaltet als Fotoelement, montiert sind. Darüber hinaus sind am ersten Stift 1 eine Kollimationslinse 3.3, sowie ein strukturiertes Element, das als eine Abtastplatte 3.4 ausgestaltet ist, befestigt.

Die Leiterplatte 3.1 weist eine Flexleiterverbindung zum Gehäuse 4 hin auf, die unter anderem zur elektrischen Versorgung der Lichtquelle 3.2 und zur Signalübertragung aus dem Fotodetektor 3.6 dient. Alternativ können an dieser Stelle auch verdrillte, lackisolierte Drähte verwendet werden. Vorteilhaft ist in diesem Zusammenhang, dass aus einer derartigen elektrischen Anbindung der Leiterplatte 3.1 mit dem Gehäuse 4 eine sehr geringe Krafteinleitung in den Stift 1 resultiert.

Diesen Komponenten gegenüber angeordnet befindet sich eine Maßverkörperung 3.5 am zweiten Stift 2. Die Maßverkörperung 3.5 ist ein strukturiertes Element auf dem als Struktur eine überaus feine Skala aufgebracht ist. Im vorliegenden Ausführungsbeispiel weist die Maßverkörperung 3.5 beziehungsweise die Skala eine Teilungsperiode von 8 µm auf. Da also hier ein Auflichtsystem vorliegt, befindet sich die Skala auf der zur Abtastplatte 3.4 zugewandten Oberfläche der Maßverkörperung 3.5. Die optische Achse ist also in diesem Ausführungsbeispiel orthogonal zu den Längsachsen A1, A2 der Stifte 1, 2 ausgerichtet. Der neutrale Drehpunkt der Sensoreinrichtung 3 befindet sich im gezeigten Ausführungsbeispiel nahezu in der Ebene der Skala, etwa in der Mitte zwischen den Stiften 1, 2. Diese Ausgestaltung ist vor allem dann wichtig, wenn die zu messenden Bauteile, hier die Spiegelsegmente 10, 20, Winkelbewegungen erfahren, so dass der tatsächliche Messort relevant wird. Ein symmetrisch zu den Stiften 1, 2 liegender Messort ist dabei besonders vorteilhaft.

In den gezeigten Ausführungsbeispielen weist die Messvorrichtung ein Gehäuse 4 auf, welches sowohl den ersten Stift 1 als auch den zweiten Stift 2 teilweise, und die Sensoreinrichtung 3 vollständig umgibt. Infolge dieser Kapselung der Sensoreinrichtung 3 durch das Gehäuse 4, ist diese geschützt gegen Umwelteinflüsse, wie Verschmutzung, Kondensation und elektromagnetische Störungen. Zum Schutz vor Umwelteinflüssen kann zusätzlich optional ein geringer Überdruck im Gehäuse 4 erzeugt werden, etwa durch Einleiten von Druckluft in das Gehäuse 4.

Für den vorgesehenen Einsatz der Messvorrichtung bei Teleskopen ist es besonders wichtig, dass die Sensoreinrichtung 3 kein Licht nach außen abgibt. Zur Erreichung der geforderten Lichtdichtigkeit ist daher an jedem Stift 1, 2 jeweils eine faltenbalgartige Membrandichtung 1.2, 2.2 angeordnet. Die Membrandichtungen 1.2, 2.2 sind so ausgestaltet, dass diese minimale axiale Rückstellkräfte auf die Stifte 1, 2 ausüben. Darüber hinaus sind an jedem Stift 1, 2 Ringlamellen 1.3, 2.3 angeordnet, die von einer lamellenartigen Buchse 4.5 im Gehäuse 4 axial verschiebbar umgeben sind. Die Membrandichtungen 1.2, 2.2 sichern zusammen mit den Ringlamellen 1.3, 2.3 und den Buchsen 4.5 die Lichtdichtheit der Sensoreinrichtung 3 zum Teleskop hin.

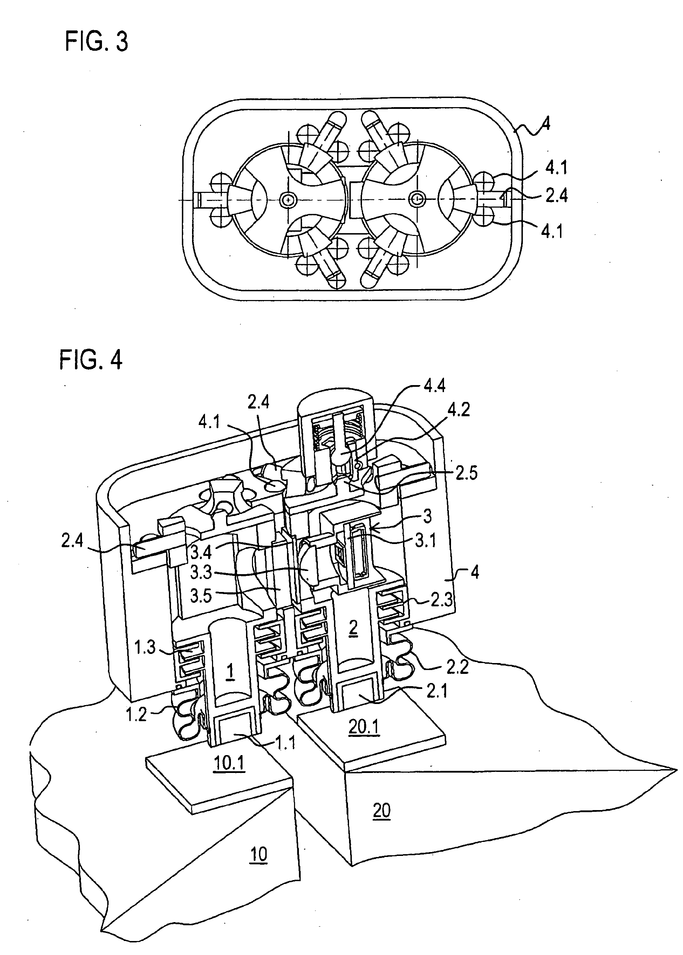

Ferner sind an jedem Stift 1, 2 jeweils drei um 120° versetzt angeordnete hochgenau gefertigte Bolzen 1.4, 2.4 befestigt, die bezüglich der jeweiligen Längsachse A1, A2 der Stifte 1, 2 radial in der x-y-Ebene (Fig. 5) nach außen weisen und als stiftseitige Auflagerelemente dienen. In der so genannten Parkposition, gemäß den Figuren 1 und 4 ist jeder der Bolzen 1.4, 2.4 zwischen zwei Kugeln 4.1 gelagert, wobei die Kugeln 4.1 dann als gehäuseseitige Auflagerelemente dienen. Auch die Kugeln 4.1 sind bezüglich ihrer Abmessung überaus präzise ausgestaltet. Der Abstand zwischen zwei unmittelbar benachbarten Kugeln 4.1 ist kleiner als der Durchmesser der Bolzen 1.4, 2.4, so dass ein präzises Auflager für die Stifte 1, 2 geschaffen wird. Die Auflager weisen also zwei Auflagerelementgruppen auf, nämlich die Bolzen 1.4, 2.4 und die Kugeln 4.1, wobei die Bolzen 1.4, 2.4 den Stiften 1, 2 zugeordnet werden können, während die Kugeln 4.1 dem Gehäuse 4 zugeordnet werden können.

Am Gehäuse 4 sind Hebel 4.2 schwenkbar angebaut, welche jeweils eine konische Fläche aufweisen. Diese konischen Flächen wirken jeweils mit einem konischen Zapfen 1.5, 2.5 der Stifte 1, 2 zusammen, und zwar in der Weise, dass die Stifte 1, 2 in der Parkposition, bezüglich ihrer Längsachsen A1, A2 axial, in das Auflager gedrückt werden. Insbesondere werden die Bolzen. 1.4, 2.4 der beiden Stifte 1, 2 in den Zwischenraum zwischen die Kugeln 4.1 gedrückt. Die Druckkraft wird jeweils durch eine Feder 4.3 erzeugt, die mit einem Kugelzapfen 4.4 gekoppelt ist, wobei jeweils ein Kugelzapfen 4.4 auf einen der Hebel 4.2 drückt.

Durch diese geometrische Anordnung, insbesondere durch die Ausgestaltung der Auflager, ist in der Parkposition gewährleistet, dass die beiden Stifte 1, 2 im Raum reproduzierbar und exakt relativ zueinander ausgerichtet sind. Dies betrifft nicht nur die relative Ausrichtung der Stifte 1, 2 in deren axialer Richtung (z-Richtung), sondern auch bezüglich ihrer Drehstellung um deren Längsachsen A1, A2. Denn die Anordnung der Auflagerpunkte durch die Kugeln 4.1 im Zusammenspiel mit den drei um 120° versetzt angeordneten Bolzen 1.4, 2.4 definiert klar die Drehstellung der Stifte 1, 2 zueinander. Hinzu kommt, dass auch der Abstand zwischen den beiden Stiften 1, 2 in der Parkposition durch die besondere Ausgestaltung der Auflager festgelegt ist. Die Festlegung ist derart gewählt, dass eine relative Ausrichtung der Stifte 1, 2 vorliegt, die im Hinblick auf die Erfordernisse der Sensoreinrichtung 3 optimiert ist. Durch die spezielle Ausgestaltung des Auflagers, das insbesondere die Kugeln 4.1 umfasst, wird quasi eine Selbstjustierung der Stifte 1, 2 zueinander und damit eine geometrische Selbstjustierung der Sensoreinrichtung 3 erreicht.

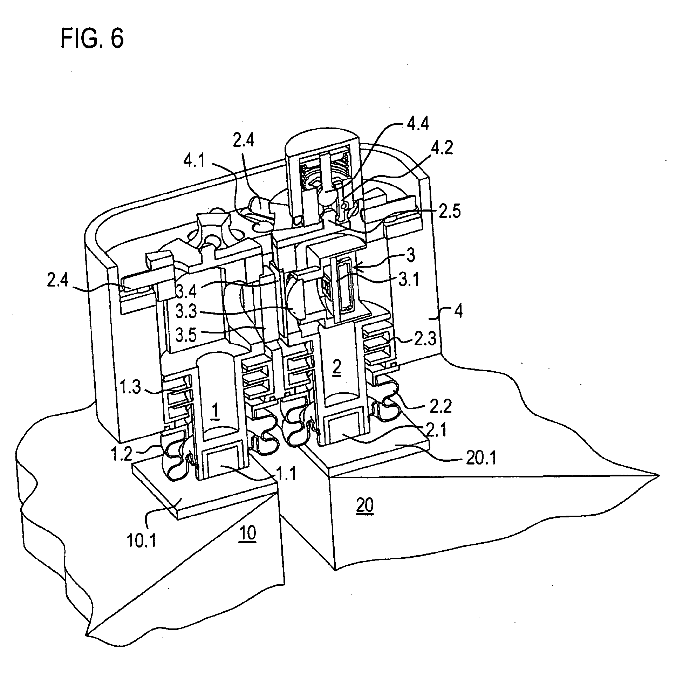

Bevor die Messvorrichtung in Betrieb genommen wird, muss diese von der Parkposition in eine Betriebsposition überführt werden. Wie bereits erläutert, ist das Gehäuse 4 fest mit der Trägerstruktur verbunden. Die Spiegelsegmente 10, 20 nähern sich dann der Messvorrichtung entgegen der z-Richtung, beziehungsweise in axialer Richtung, bezogen auf die Längsachsen A1, A2 der beiden Stifte 1, 2. Durch die Magnete 1.1, 1.2 heften sich die Stifte 1, 2 an die ferromagnetischen Platten 10.1, 20.1 der Spiegelsegmente 10, 20. Die Spiegelsegmente 10, 20 bewegen sich dann noch weiter in axialer Richtung und schieben die Stifte 1, 2 aus der Parkposition heraus. Die Stifte 1, 2 sind nun innerhalb des Gehäuses 4 frei und können bezüglich des Gehäuses 4 berührungslos zur Messung der Relativposition bewegt werden. Somit ist die Messvorrichtung in eine Betriebsposition gemäß den Figuren 5 und 6 übergegangen.

Die Stifte 1, 2 sind so gestaltet ist, dass diese in Haftkontakt mit dem jeweiligen Spiegelsegment 10, 20 bringbar sind. Die entsprechenden Magnete 1.1, 1.2 haben eine vergleichsweise große ebene Fläche, die an den ferromagnetischen Platten 10.1, 20.1 haftet. Aus diesem Grund sind die Stifte 1, 2 starr und winkelsteif an den ferromagnetischen Platten 10.1, 20.1 beziehungsweise den Spiegelsegmenten 10, 20 befestigt. Dabei sind die Stifte 1, 2 im Messbetrieb in der Betriebsposition derart an den Spiegelsegmenten 10, 20 festgelegt, dass Bewegungen mit einer Richtungskomponente parallel zu deren Längsachsen A1, A2 beziehungsweise zur Richtung z von den Spiegelsegmenten 10, 20 auf die Stifte 1, 2 übertragbar sind. Die Spiegelsegmente 10, 20, beziehungsweise die ferromagnetischen Platten 10.1, 20.1, können infolge der haftenden Befestigung an den Stiften 1, 2 in die Stifte 1, 2 Kräfte Fₓ, F_{y}, F_{z}, aus x, y und z-Richtung, sowie Momente Mₓ, M_{y}, M_{z} um diese zueinander orthogonalen Achsen x, y, z einleiten. Die Befestigung entspricht also einer sechswertigen Lagerung. Durch diese Art der Befestigung ist eine überaus exakte Bestimmung des relativen Versatzes zwischen den Spiegelsegmenten 10, 20 möglich.

Damit das Gesamtsystem nicht statisch überbestimmt ist, haben die beiden Stifte 1, 2 im Messbetrieb keine Führung innerhalb der Messvorrichtung beziehungsweise innerhalb des Gehäuses 4. Mit anderen Worten sind die Stifte 1, 2 im Messbetrieb innerhalb der Messvorrichtung ungeführt, denn Führungsbewegungen in allen Richtungen werden nur durch die Spiegelsegmente 10, 20 selbst eingeleitet, die sich außerhalb der Messvorrichtung befinden. Durch diese Bauweise wird die Messung selbst unabhängig von der genauen Lage und Ausrichtung des Gehäuses 4 relativ zu den Spiegelsegmenten 10, 20, wobei das Gehäuse 4, wie bereits erwähnt, an der Trägerstruktur befestigt ist.

Im Betrieb eines entsprechenden Teleskops muss die Lage der Spiegelsegmente 10, 20 zueinander in z-Richtung, beziehungsweise entlang der Längsachsen A1, A2 der Stifte 1, 2, die axial im Gehäuse 4 relativ zueinander verschieblich sind, sehr genau kontrolliert werden können. Die relative Position der Spiegelsegmente 10, 20 kann beispielsweise durch Gravitationseffekte beim Drehen des Teleskops gestört werden. Insbesondere kann die Trägerstruktur der Spiegelsegmente 10, 20 auf Grund äußerer Krafteinwirkungen oder inneren Spannungen verformt werden. Diese Verformungen können relativ groß sein, da insbesondere bei großen Teleskopen eine leichte und Material sparende Bauweise der Trägerstrukturen angestrebt werden muss, so dass sich die Trägerstrukturen vergleichsweise biegeweich verhalten. Mit Hilfe der optischen Sensoreinrichtung 3 kann der Versatz entlang der Längsachsen A1, A2 zwischen der Abtastplatte 3.4 und der Maßverkörperung 3.5 fotoelektrisch bestimmt werden, was dem Versatz der beiden Spiegelsegmente 10, 20 entspricht. Die Position der Spiegelsegmente 10, 20 relativ zur Trägerstruktur spielt bei der Messung innerhalb gewisser Grenzen praktisch keine Rolle. Die Lage der Trägerstruktur wird dann die Bestimmung des Versatzes der Spiegelsegmente 10, 20 nicht beeinflussen. Die Messsignale der Messvorrichtung werden einem Regelkreis zugeführt, so dass durch entsprechende Regelungsmaßnahmen die Spiegelsegmente 10, 20 stets optimal zueinander ausgerichtet sind, unabhängig von der Lage des Teleskops, oder von thermischen Dehnungen innerhalb der Trägerstruktur beziehungsweise des Teleskops.

Da das Gehäuse 4 an der Trägerstruktur der Spiegelsegmente 10, 20 befestigt ist, und die elektrischen Kabel zur Übertragung der Messsignale in eine Nachfolgeelektronik am Gehäuse 4 befestigt sind, stören die Bewegungen der Stifte 1, 2 nicht die Messung. Durch die spezielle Ausgestaltung der Messvorrichtung, insbesondere durch die ungeführte Anordnung und die Flexleiterverbindung, durch die praktisch keine Kräfte auf den zweiten Stift 2 eingeleitet werden, wird von der Messvorrichtung als Ganzes praktisch keine Krafteinleitung auf die Spiegelsegmente 10, 20 vorgenommen, was für die exakte Positionierung der Spiegelsegmente 10, 20 von Vorteil ist.

Aus den sechs Messwerten je hexagonalem Spiegelsegment 10, 20 werden neben dem Versatz auch die beiden Verkippungen außerhalb der Spiegelebene ermittelt. Diese Funktionalität wird durch die Bestimmung der relativen Verschiebung zwischen der Maßverkörperung 3.5 und der Abtastpatte 3.4 durch die Sensoreinrichtung 3 erreicht.

Die Spiegelsegmente 10, 20 müssen in regelmäßigen Intervallen neu beschichtet werden. Daher ist es notwendig, dass beim Aus- und Einbau der Spiegelsegmente 10, 20 ein möglichst geringer Aufwand hinsichtlich der Montage und Justage der Messvorrichtung anfällt. Beim Ausbau der Spiegelsegmente 10, 20 werden diese von der Messvorrichtung in Richtung der Längsachsen A1, A2 der Stifte 1, 2 (z-Richtung) wegbewegt. Dabei werden die Stifte 1, 2 in die Parkposition gezogen. Durch ein in den Figuren nicht näher dargestelltes Sensorelement wird das erreichen der Parkposition an eine Folgeelektronik signalisiert. Wenn die Spiegelsegmente 10, 20 weiter bewegt werden, lösen sich die Magnete 1.1, 2.1 von den ferromagnetischen Platten 10.1, 20.1 (Fig. 1, 4), und die Spiegelsegmente 10, 20 können dann herausgehoben werden. Hierfür ist kein Werkzeug erforderlich. Die Stifte 1, 2 sind also so ausgestaltet, dass diese selbstheftend sowie selbstlösend sind. Darüber hinaus nehmen die Stifte 1, 2 in der Parkposition automatisch ihre optimale relative Position zueinander reproduzierbar wieder ein, so dass die Messvorrichtung als selbstjustierend bezeichnet werden kann. In der Parkposition ist die Messvorrichtung im Hinblick auf die Komponenten der Sensoreinrichtung 3 in einem Zustand, der eine korrekte Überführung in den Betriebsmodus beziehungsweise in die Betriebsposition ermöglicht ohne besonderes Zutun eines Bedieners.

Um die seitliche Verschiebung der Stifte 1, 2 und ihre Winkellage nach jedem Wechsel von Spiegelsegmenten 10, 20 bewerten zu können, können verschiedene Signale der Sensoreinrichtung 3 herangezogen werden. Zum Beispiel kann die Amplitude von Inkrementalsignalen oder eine Referenzimpulslage relativ zu den Inkrementalsignalen zu diesem Zweck herangezogen werden. Ebenso können zusätzliche Sensorsignale oder Signale resultierend aus einem elektrischen Kontakt eines Stifts 1, 2 mit der ferromagnetischen Platte 10.1, 20.1 hierzu verwendet werden.

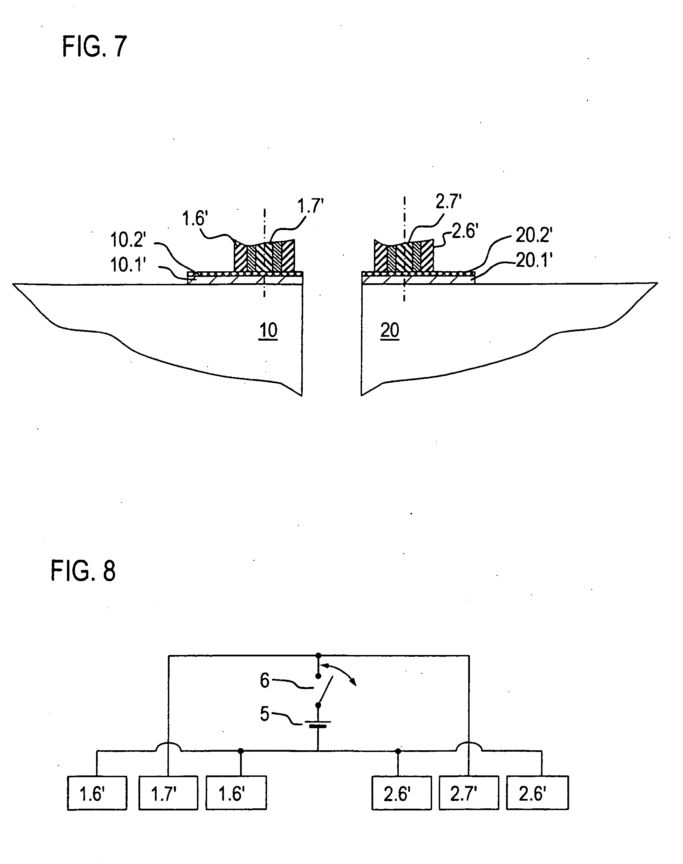

Alternativ zu der Befestigung der Stifte 1, 2 mittels Magneten 1.5, 1.6, können diese nach einem zweiten Ausführungsbeispiel gemäß den Figuren 7 und 8 durch eine elektrostatisch wirkende Anordnung befestigt werden. In dieser Ausführungsform sind pro Stift 1, 2 jeweils eine Ringelektrode 1.6', 2.6' (Kathode) und eine Zentralelektrode 1.7', 2.7' (Anode) vorgesehen, wobei jede Ringelektrode 1.6', 2.6' durch eine Isolierschicht von der jeweiligen Zentralelektrode 1.7', 2.7' getrennt ist. Dabei sind die Ringelektroden 1.6', 2.6' an einem Pol einer Gleichspannungsquelle angeschlossen, während die Zentralelektroden 1.7', 2.7' mit dem anderem Pol kontaktiert sind (Fig. 8).

An den Spiegelsegmenten 10, 20 ist an den für die Befestigung vorgesehenen Flächen jeweils eine elektrisch leitende Schicht 10.1', 20.1' fixiert, auf der eine dielektrische Schicht 10.2' 20.2' aufgebracht ist. Als Materialien für die dielektrische Schicht 10.2' 20.2' kommen z. B. Ta₂O₅, Si₃N₄, Quarz, SrTi₄, Y₂O₃ in Betracht, da diese Werkstoffe eine hohe relative Dielektrizitätszahl und überdies eine hohe Durchschlagsfestigkeit aufweisen.

Alternativ dazu kann bei der Verwendung von Zerodur, beispielsweise als Material für die Spiegelsegmente 10, 20, der Johnson Rabbeck-Effekt genutzt werden und die Befestigung ohne entsprechende Schichten als Gegenelektrode auf den Spiegelsegmenten 10, 20 erreicht werden, wenn die Elektrodenstruktur aus gitterförmigen, abwechselnden Anoden und Kathoden besteht.

Mit Hilfe eines Schalters 6 können die Ringelektroden 1.6', 2.6' und die Zentralelektroden 1.7', 2.7' wahlweise mit Spannung beaufschlagt werden oder nicht. Wenn die Spannung anliegt, entsteht ein Haftkontakt zwischen den Spiegelsegmenten 10, 20 und den Stiften 1, 2. Dadurch, dass die Ringelektroden 1.6', 2.6' eine vergleichsweise große Berührfläche umschließen wird auch hier eine winkelsteife Befestigung der Stifte 1, 2 an den Spiegelsegmenten 10, 20 ermöglicht. Insbesondere sind die Stifte 1, 2 auch im zweiten Ausführungsbeispiel in allen Freiheitsgraden (Fₓ, F_{y}, F_{z}; Mₓ, M_{y}, M_{z}) an den Spiegelsegmenten 10, 20 befestigt.

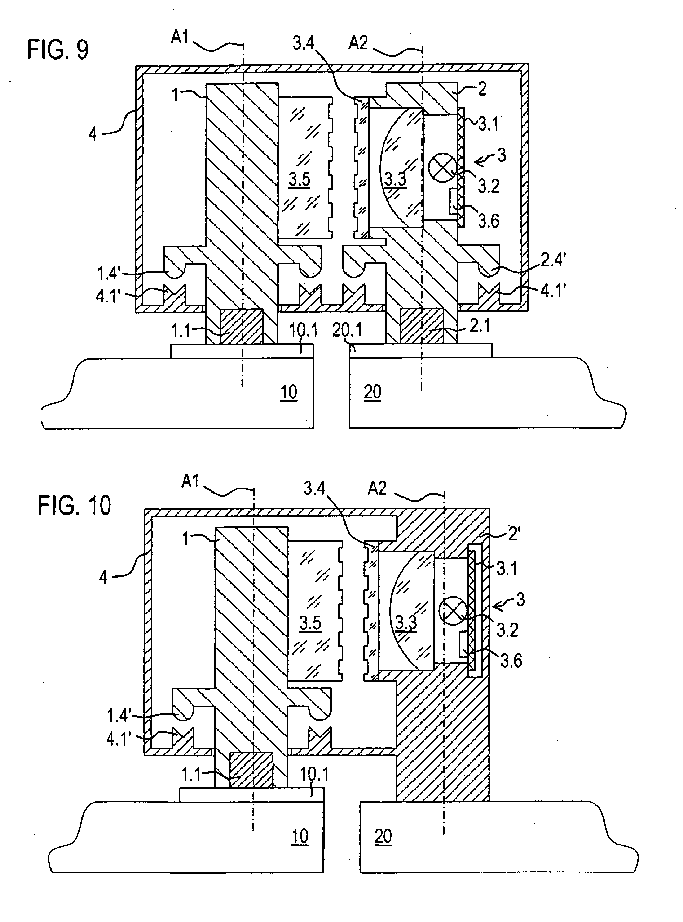

In der Figur 9 ist ein drittes Ausführungsbeispiel dargestellt, wobei sich dort die Messvorrichtung in einer Betriebsposition befindet und als Messkörper zwei nahezu identische Stifte 1, 2 verwendet werden. Ein wesentlicher Unterscheid zu den vorherigen Ausführungsbeispielen besteht darin, dass nunmehr das Auflager gehäuseseitig aus einer V-Nut 4.1' und stiftseitig aus angeformten Halbkugeln 1.4', 2.4' besteht, und dass das Auflager bezüglich der z-Richtung zwischen der Sensoreinrichtung 3 und den Spiegelsegmenten 10, 20 angeordnet ist. In der Parkposition werden auch im dritten Ausführungsbeispiel die Stifte 1, 2 im Raum reproduzierbar exakt zueinander ausgerichtet sind. In der Figur 9 wurde auf die Darstellung des Anpressmechanismus zum Andrücken der Halbkugeln 1.4', 2.4' in die jeweilige V-Nut 4.1' verzichtet.

Ein viertes Ausführungsbeispiel ist in der Figur 10 gezeigt. Die Messvorrichtung gemäß diesem Beispiel umfasst ebenfalls zwei Messkörper, wobei der erste Messkörper als Stift 1 ausgestaltet ist. Der zweite Messkörper 2' ist gegenüber dem Gehäuse 4 unverschieblich angeordnet. Insbesondere ist der zweite Messkörper 2' in das Gehäuse 4 integriert. Der erste Stift 1 ist, wie bereits oben beschrieben, haftend, mit Hilfe des Magneten 1.1 und der ferromagnetischen Platte 10.1, winkelsteif an dem Spiegelsegment 10 befestigt. Der zweite Messkörper 2' ist ebenfalls winkelsteif an dem anderen Spiegelsegment 20 befestigt. Dabei kann eine haftende Befestigung vorgenommen werden, etwa durch einen weiteren Magneten, oder es kann eine andersartige winkelsteife Befestigung gewählt werden. Die Parkposition des ersten Stiftes 1 wird im vierten Ausführungsbeispiel analog zum dritten Ausführungsbeispiel erreicht. Nachdem der zweite Messkörper 2' hier Bestandteil des Gehäuses 4 ist, ist der Stift 1 in der Parkposition im Raum reproduzierbar exakt zum zweiten Messkörper 2' ausgerichtet.

Es kann aber auch vorkommen, dass die Bewegungen der Spiegelsegmente 10, 20 nicht streng entlang der z-Richtung verlaufen, sondern vielmehr Richtungskomponenten quer zur Richtung z aufweisen. Ferner kann eine, wenn auch minimale, Schrägstellung der beiden Stifte 1,2 zueinander in der Praxis nicht vermieden werden. Im vorliegenden Ausführungsbeispiel können sich die Spiegelsegmente 10, 20 relativ bis zu einem Millimeter, insbesondere in Richtung x, quer zueinander bewegen. Solche Querbewegungen erzeugten bei einer Schrägstellung des ersten Stifts 1 gegenüber dem zweiten Stift 2 von etwa 0,1 mrad einen Messfehler von 100 nm, sofern nicht besondere Maßnahmen ergriffen würden. Derartige Messfehler würden den Betrieb eines segmentierten Teleskopspiegels unmöglich machen.

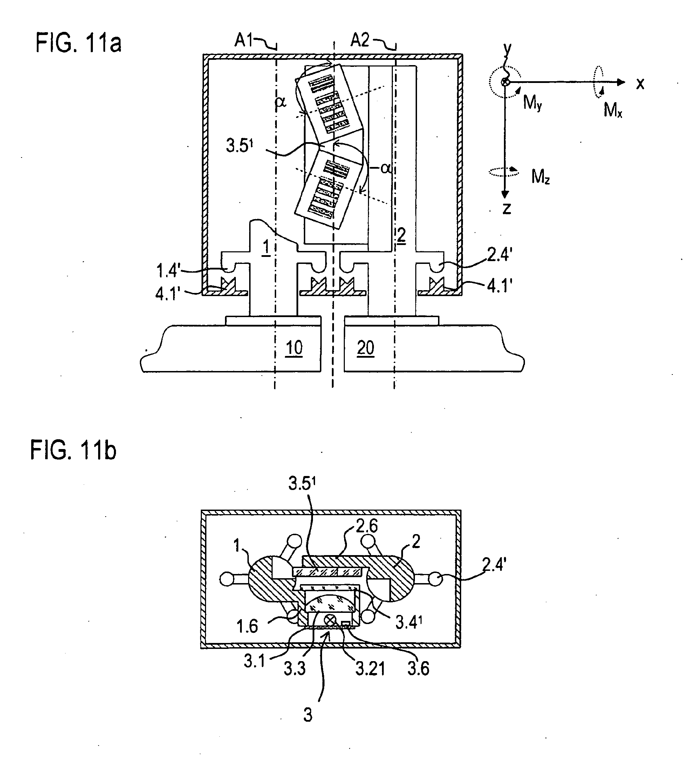

In den Ausführungsbeispielen fünf bis neun, gemäß den Figuren 11a bis 15, werden Messvorrichtungen beschrieben, die vergleichsweise unempfindlich gegenüber Querbewegungen der Spiegelsegmente 10, 20 sind. Wobei für die betreffenden Teleskopspiegel insbesondere Querbewegungen in x-Richtung von Bedeutung sind. Derartige Querbewegungen können beispielsweise durch thermische Ausdehnungen der der Spiegelsegmente 10, 20 oder durch Gravitationsbelastungen der Trägerstruktur beim Schwenken des Spiegelteleskops entstehen. Die Ausführungsbeispiele gemäß den Figuren 11a bis 15 haben allesamt gemeinsam, dass die elektrischen Signale der Sensoreinrichtungen 3 zur Bestimmung der relativen Lage der beiden Messkörper sowohl in der Richtung z als auch in der zur Richtung z orthogonalen Richtung x verwendbar sind. Insbesondere umfassen die Messvorrichtungen strukturierte Elemente 3.4¹, 3.4², 3.4³; 3.5¹, 3.5², 3.5³, 3.5⁴, 3.5⁵ mit Gitterstrukturen, wobei die Gitterstrukturen relativ zur Richtung z um Winkel α, -α, bzw. β, -β geneigt sind. Als strukturierte Elemente sind die Abtastplatten 3.4¹, 3.4², 3.4³ und die Maßverkörperungen 3.5¹, 3.5², 3.5³, 3.5⁴, 3.5⁵ zu verstehen. Weiterhin weisen die Messvorrichtungen gemäß den Ausführungsbeispielen fünf bis neun jeweils zwei Sensoreinrichtungen 3 auf, deren Messrichtungen bewusst von der geforderten Messrichtung abweichen und zwar so, dass die Messrichtungen der beiden Sensoreinrichtungen 3 unterschiedliche Winkel mit der geforderten Messrichtung, also mit der Richtung z, einschließen. Die Messwerte der beiden Sensoreinrichtungen 3 werden dann entsprechend einer Vektoraddition mit Hilfe von Vorfaktoren so verrechnet, dass sich eine resultierende Messrichtung ergibt, die der z-Richtung entspricht.

In den Figuren 11a und 11b ist schematisch eine Messvorrichtung gemäß dem fünften Ausführungsbeispiel gezeigt. Der erste Stift 1 und der zweite Stift 2 weisen hier jeweils einen Flügel 1.6, 2.6 auf, an dem jeweils Komponenten der Sensoreinrichtungen 3 montiert sind.

Am Flügel 1.6 des ersten Stifts 1 sind unter anderem zwei, in z-Richtung versetzt angeordnete Lichtquellen 3.2, Abtastplatten 3.4¹ und Fotoelemente 3.6 befestigt. Die Abtastplatten 3.4¹ im fünften Ausführungsbeispiel umfassen jeweils (in den Figuren nicht dargestellte) Gitterstrukturen, welche schräg orientiert sind, so dass die Gitterstrukturen eine Komponente in Richtung z aufweisen, also nicht orthogonal zur z-Richtung ausgerichtet sind.

Am Flügel 2.6 des zweiten Stifts 2 ist eine Maßverkörperung 3.5¹ angebracht, die ebenfalls schräg orientierte Gitterstrukturen aufweist, wobei auch diese Gitterstrukturen so orientiert sind, dass diese eine Komponente in Richtung z aufweisen, also nicht orthogonal zur z-Richtung ausgerichtet sind. Die beiden Sensoreinrichtungen 3 entsprechen im Prinzip jeweils den Sensoreinrichtungen 3 der vorhergegangenen Ausführungsbeispiele.

In den gezeigten Ausführungsbeispielen sind die Gitterstrukturen als Phasengitter oder Amplitudengitter ausgebildet. Im fünften Ausführungsbeispiel liegen gemäß der Figur 11a auf der Maßverkörperung 3.5¹ vier einzelne Gitterstrukturen vor. Zunächst ist die in der Figur 11a oberste Gitterstruktur als eine Referenzmarke ausgebildet. Die dazu unterhalb liegende benachbarte Gitterstruktur dient zur inkrementalen Wegmessung. Die Gitterstruktur der Referenzmarke als auch die Gitterstruktur zur inkrementalen Wegmessung bilden einen ersten Bereich von Gitterstrukturen. Die Gitterstrukturen des ersten Bereichs sind um einen Winkel α relativ zur Richtung z geneigt angeordnet. Unterhalb des ersten Bereichs von Gitterstrukturen befindet sich ein zweiter Bereich von Gitterstrukturen mit einem weiteren Paar von Gitterstrukturen. Die Gitterstrukturen des zweiten Bereichs sind um einen Winkel - α relativ zur Richtung z geneigt angeordnet, also komplementär zueinander orientiert. Da die Winkel α und -α den gleichen Betrag, hier 100 mrad, aufweisen, sind die Gitterstrukturen der beiden Bereiche darüber hinaus auch symmetrisch zueinander angeordnet.

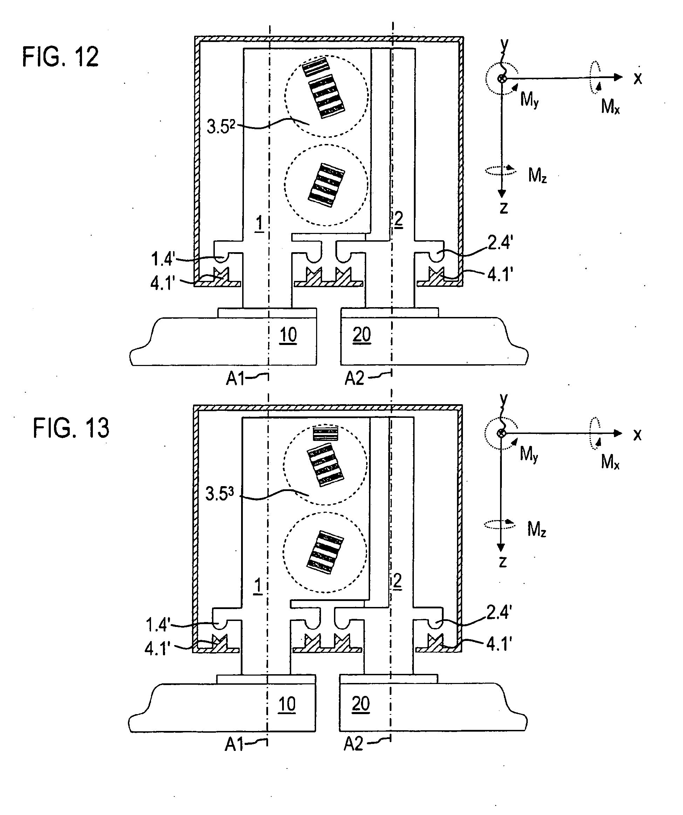

Den Gitterstrukturen der Maßverkörperung 3.5¹ liegen Abtastplatten 3.4¹ gegenüber. Die Abtastplatten 3.4¹ weisen ihrerseits Gitterstrukturen entsprechend denen der Maßverkörperung 3.5¹ auf. Die Gitterstrukturen der Abtastplatten 3.4¹ sind dabei parallel zu denjenigen der Maßverkörperung 3.5¹ angeordnet. Wenngleich in der Figur 11b nur ein Fotodetektor 3.6 sichtbar ist, so weisen die Messvorrichtung gemäß den Figuren 11a und 11b (wie auch die gemäß den Figuren 12 bis 15) jeweils zwei Fotodetektoren 3.6 auf. Das Licht der Lichtquelle 3.2 tritt im Betrieb der Messvorrichtung durch die jeweils benachbarte Abtastplatte 3.4¹ durch deren Gitterstrukturen hindurch und trifft dann auf die Gitterstrukturen der Maßverkörperung 3.5¹ welche das Licht entsprechend moduliert reflektiert. Nach erneutem Durchtritt des Lichts durch die Abtastplatte 3.4¹ wird von den beiden Fotodetektoren 3.6 das modulierte Licht in elektrische Signale umgewandelt. Entsprechend ist also jeder der beiden Bereiche von Gitterstrukturen der Maßverkörperung 3.5¹ von einem Fotodetektor 3.6 abtastbar.

In der Figur 12 ist ein sechstes Ausführungsbeispiel gezeigt, welches sich vom fünften im Wesentlichen dadurch unterscheidet, dass im unteren Bereich von Gitterstrukturen der Maßverkörperung 3.5² auf die Referenzmarke verzichtet wurde, was insbesondere bei geringem zur Verfügung stehendem Bauraum vorteilhaft sein kann. In den Figuren 12 und 13 sind im Übrigen die Abtastplatten der entsprechenden Messvorrichtungen nicht dargestellt. Die gezeigten Gitterstrukturen sind diejenigen der jeweiligen Maßverkörperung 3.5², 3.5³.

Wenn der relative Versatz der Stifte 1, 2 in z-Richtung absolut gemessen werden soll, ist es vorteilhaft die Gitterstrukturen der Referenzmarke der Maßverkörperung 3.5³ senkrecht zur z-Richtung auszurichten, entsprechend dem siebten Ausführungsbeispiel (Figur 13). An der Stelle (z, x) an der das Referenzmarkensignal erzeugt wird, können die Positionswerte der beiden Sensoreinrichtungen 3 ermittelt und verrechnet werden, so dass ein absoluter Referenzwert für die z-Richtung erzeugt werden kann, der näherungsweise unabhängig von der Relativlage in Richtung x ist.

Alternativ zu den bereits vorgestellten Ausführungsformen kann eine Messvorrichtung auch mit einem Kreuzgitter ausgestaltet sein, welches übereinander liegende Gitterstrukturen aufweist. Die Gitterstrukturen können dabei rechtwinklig oder schiefwinklig zueinander orientiert sein. Derartige Kreuzgitteranordnungen können durch eine einzige Lichtquelle beleuchtet werden, so dass also das Vorsehen einer einzigen Lichtquelle bei Verwendung eines Kreuzgitters in der Messvorrichtung ausreichen kann.

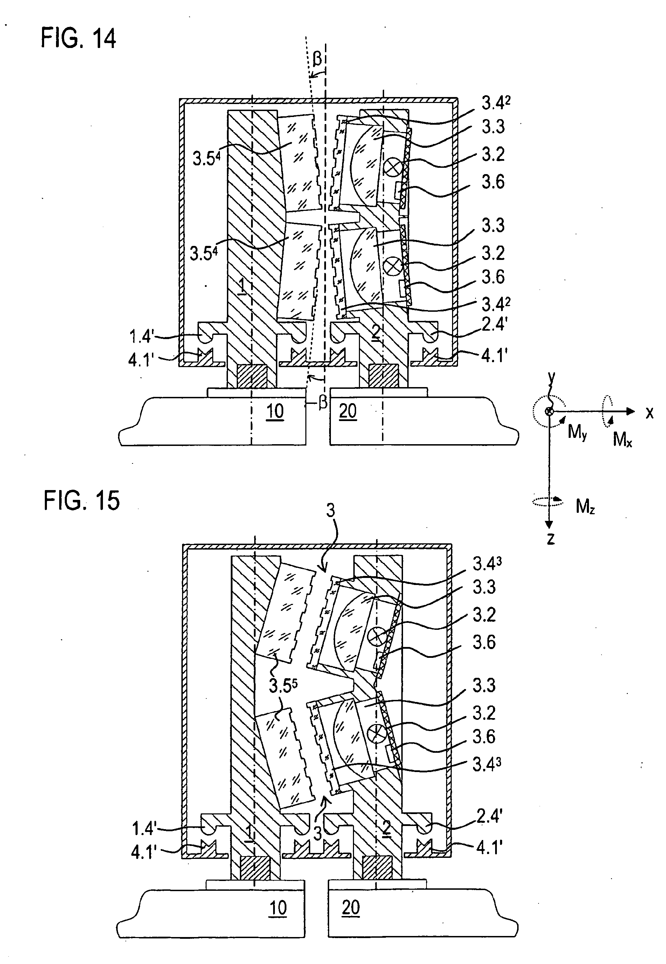

Im achten und im neunten Ausführungsbeispiel weisen die strukturierte Elemente, also die Maßverkörperungen 3.5⁴, 3.5⁵ und die Abtastplatten 3.4², 3.4³, ebenfalls Gitterstrukturen auf, die relativ zur Richtung z geneigt sind, allerdings sind hier die Gitterstrukturen in einer geometrischen Ebene (orthogonal zur Zeichenebene) angeordnet, welche schief gegenüber der Richtung z im Raum liegt. Gemäß der Figur 14 ist der erste Bereich der Gitterstrukturen der Maßverkörperung 3.5⁴ um den Winkel β gegenüber der z-Richtung schief gestellt, während der zweite Bereich symmetrisch und komplementär um den Winkel -β gegenüber der z-Richtung geneigt ist. Wenngleich in der Figur 14 die Maßverkörperung 3.5⁴ zweigeteilt dargestellt ist, kann diese auch aus einem einzigen Glaselement mit entsprechenden schrägen Flächen hergestellt werden.

Die geometrischen Betrachtungen des achten Ausführungsbeispiels können prinzipiell auch für das neune Ausführungsbeispiel gemäß der Figur 15 angewendet werden. Hier ist die Maßverkörperung 3.5⁵, in einer konvexen Anordnung ausgestaltet, wobei auch hier eine einteilige Gestaltung der Maßverkörperung 3.5⁵ möglich ist. Ansonsten weist die Messvorrichtung gemäß dem achten Ausführungsbeispiel im Wesentlichen die gleichen Merkmale auf wie die des neunen Ausführungsbeispiels.

Damit die Querbewegungen in Richtung x kompensiert werden können, muss die Messvorrichtung gemäß den Ausführungsbeispielen fünf bis neun zunächst kalibriert werden. Zu diesem Zweck wird die Messvorrichtung an Maschinenteile angebaut, welche in z-Richtung definiert bewegt werden. Mit Hilfe eines Referenzsystems z.B. ein Laserinterferometer oder ein Wellenfrontsensor, wird eine tatsächliche relative Verschiebung in z-Richtung gemessen. Aus den ermittelten Positionswerten des Referenzsystems und der beiden Sensoreinrichtungen 3 lassen sich dann die Korrekturkoeffizienten errechnen, welche als Grundlage für eine Kalibrierung der Messvorrichtung dienen. Im eigentlichen Messbetrieb ist es dann möglich, dass die Messvorrichtung exakte Messwerte für die Richtung z liefert, während durch die Korrekturmaßnahmen Bewegungen in Richtung x das Messergebnis nicht beeinträchtigen. Darüber hinaus kann eine entsprechende Messvorrichtung auch in der Weise einsetzbar sein, dass der relative Versatz der Stifte 1, 2 in Richtung x als zweiter Positionswert ausgegeben wird. Der Versatz in Richtung x kann dann beispielsweise vom Betreiber des Teleskops zu weiteren Analysen verwendet werden.

In den Ausführungsbeispielen der Figuren 9 und 15 sind nur der Übersichtlichkeit halber einige Details weggelassen, die in den Figuren 1 bis 6 gezeigt sind. Eine Kombination dieser Details des ersten Ausführungsbeispiels mit den anderen Beispielen ist sinnvoll möglich. Auch wenn in den Figuren 9 und 15 beispielsweise keine Maßnahmen zur Abdichtung von Licht dargestellt sind, können diese analog zum ersten Ausführungsbeispiel auch hier mit Vorteil angewendet werden. Das gleiche gilt unter anderem auch für die Flexleiterverbindungen oder die Andrückvorrichtung mit der Feder 4.3.

## Patentansprüche

1. Messvorrichtung zur Bestimmung des relativen Versatzes zwischen zwei Bauteilen (10, 20) in einer Richtung z, umfassend
- einen ersten Messkörper (1).
- einen zweiten Messkörper (2, 2'), wobei
der erste Messkörper (1) an einem ersten Bauteil (10) und der zweite Messkörper (2, 2') an einem zweiten Bauteil (20) jeweils derart befestigbar ist, dass Bewegungen mit einer Richtungskomponente parallel zur Richtung z vom einem der Bauteile (10, 20) auf den daran befestigten Messkörper (1; 2, 2') übertragbar sind, und
- eine Sensoreinrichtung (3) zur Bestimmung der relativen Lage der beiden Messkörper (1; 2, 2'),
**dadurch gekennzeichnet, dass**
der erste Messkörper (1) und der zweite Messkörper (2, 2') so gestaltet sind, dass diese jeweils an dem ersten Bauteil (10) beziehungsweise an dem zweiten Bauteil (20) winkelsteif befestigbar sind, wobei zumindest einer der Messkörper (1; 2, 2') so gestaltet ist, dass dieser in Haftkontakt mit dem ersten Bauteil (10) oder dem zweiten Bauteil (20) bringbar ist, und
die Messvorrichtung von einer Messvorrichtungs-Parkposition, in welcher die Messvorrichtung von den Bauteilen (10, 20) entkoppelt ist, in eine Messvorrichtungs-Betriebsposition überführbar ist und Auflager (1.4, 2.4, 4.1; 1.4', 2.4', 4.1') für zumindest einen Messkörper (1; 2, 2') aufweist, und dabei so konfiguriert ist dass der zumindest eine Messkörper (1; 2, 2') wahlweise eine Messkörper-Park- oder eine Messkörper-Betriebsposition, in welcher der zumindest eine Messkörper (1; 2, 2') während des Messbetriebes innerhalb der Messvorrichtung ungeführt ist, einnehmen kann, wobei durch die Ausgestaltung der Auflager (1.4, 2.4, 4.1; 1.4', 2.4', 4.1') die Messkörper (1; 2, 2') in der Messkörper-Parkposition im Raum reproduzierbar exakt zueinander ausgerichtet sind.

2. Messvorrichtung gemäß dem Anspruch 1 oder 2, **dadurch gekennzeichnet, dass** der erste Messkörper (1) und der zweite Messkörper (2, 2') so gestaltet sind, dass diese jeweils an dem ersten Bauteil (10) beziehungsweise dem zweiten Bauteil (20) derart befestigbar sind, dass durch die Befestigung Kräfte (Fx, Fy, Fz) in allen Raumrichtungen und Momente (Mx, My, Mz) um drei jeweils zueinander orthogonal ausgerichteten Achsen (x, y, z) übertragbar sind.

3. Messvorrichtung gemäß einem der vorhergehenden Ansprüche, **dadurch gekennzeichnet, dass** sowohl der erste Messkörper (1) als auch der zweite Messkörper (2, 2') so gestaltet sind, dass diese in Haftkontakt jeweils mit dem ersten Bauteil (10) beziehungsweise dem zweiten Bauteil (20) bringbar sind.

4. Messvorrichtung gemäß einem der vorhergehenden Ansprüche, **dadurch gekennzeichnet, dass** der erste Messkörper (1) und / oder der zweite Messkörper (2, 2') so gestaltet ist, dass der Haftkontakt durch eine Bewegung des ersten beziehungsweise zweiten Bauteils (10, 20) in einer Richtung mit einer Richtungskomponente parallel zur Richtung z lösbar ist.

5. Messvorrichtung gemäß einem der vorhergehenden Ansprüche, **dadurch gekennzeichnet, dass** der erste Messkörper (1) und / oder der zweite Messkörper (2, 2') einen Magneten (1.1, 2.1) zur Befestigung an dem ersten beziehungsweise zweiten Bauteil (10, 20) aufweist.

6. Messvorrichtung gemäß einem der vorhergehenden Ansprüche, **dadurch gekennzeichnet, dass** die Messvorrichtung ein Gehäuse (4) aufweist, welches sowohl den ersten Messkörper (1) als auch den zweiten Messkörper (2) zumindest teilweise umgibt.

7. Messvorrichtung gemäß einem der vorhergehenden Ansprüche, **dadurch gekennzeichnet, dass** diese zur Bestimmung der relativen Lage der beiden Messkörper (1; 2, 2') eine optische Sensoreinrichtung (3) mit einer Lichtquelle (3.2) und einem Fotodetektor (3.6) aufweist.

8. Messvorrichtung gemäß dem Anspruch 8, **dadurch gekennzeichnet, dass** am ersten Messkörper (1) und am zweiten Messkörper (2, 2') jeweils ein strukturiertes Element (3.4, 3.4¹, 3.4², 3.4³; 3.5¹, 3.5², 3.5³; 3.5⁴, 3.5⁵) befestigt ist, wobei die strukturierten Elemente (3.4, 3.4¹, 3.4², 3.4³; 3.5, 3.5¹, 3.5², 3.5³; 3.5⁴, 3.5⁵) von der Lichtquelle (3.2) beleuchtbar sind, so dass die durch die strukturierten Elemente (3.4¹, 3.4², 3.4³; 3.5, 3.5¹, 3.5², 3.5³; 3.5⁴, 3.5⁵) modulierten Lichtstrahlen vom Fotodetektor (3.6) in elektrische Signale umwandelbar sind, welche von der der relativen Lage der beiden Messkörper (1; 2, 2') abhängen.

9. Messvorrichtung gemäß dem Anspruch 9, **dadurch gekennzeichnet, dass** die elektrischen Signale zur Bestimmung der relativen Lage der beiden Messkörper (1; 2, 2') sowohl in der Richtung z als auch in einer weiteren zur Richtung z orthogonalen Richtung x verwendbar sind.

10. Messvorrichtung gemäß dem Anspruch 9 oder 10, **dadurch gekennzeichnet, dass** zumindest ein strukturiertes Element (3.4¹, 3.4², 3.4³; 3.5¹, 3.5², 3.5³; 3.5⁴, 3.5⁵) zwei Bereiche aufweist, wobei die Gitterstrukturen in zumindest einem Bereich relativ zur Richtung z geneigt sind.

11. Messvorrichtung gemäß dem Anspruch 11, **dadurch gekennzeichnet, dass** die Gitterstrukturen so orientiert sind, dass diese eine Komponente in Richtung z aufweisen.

12. Messvorrichtung gemäß dem Anspruch 11, **dadurch gekennzeichnet, dass** die Gitterstrukturen in einer geometrischen Ebene angeordnet sind, welche schief gegenüber der Richtung z im Raum liegt.

13. Messvorrichtung gemäß einem der Ansprüche 11 bis 13, **dadurch gekennzeichnet, dass** das zumindest eine strukturierte Element (3.4¹, 3.4², 3.4³; 3.5¹, 3.5², 3.5³; 3.5⁴, 3.5⁵) zwei Bereiche aufweist, wobei die Gitterstrukturen in den unterschiedlichen Bereichen komplementär orientiert sind.

14. Messvorrichtung gemäß dem Anspruch 14, **dadurch gekennzeichnet, dass** die Gitterstrukturen in den unterschiedlichen Bereichen symmetrisch zueinander angeordnet sind.

15. Messvorrichtung gemäß einem der Ansprüche 9 bis 15, **dadurch gekennzeichnet, dass** die Messvorrichtung zwei Sensoreinrichtungen (3) aufweist, zur Korrektur der relativen Lage der beiden Messkörper (1; 2, 2') im Hinblick auf einen Versatz orthogonal zur Richtung z.

16. Messvorrichtung gemäß einem der Ansprüche 8 bis 16, **dadurch gekennzeichnet, dass** die Messvorrichtung ein Gehäuse (4) aufweist, welches lichtdicht ausgeführt ist.

17. Messvorrichtung gemäß einem der vorhergehenden Ansprüche, **dadurch gekennzeichnet, dass** die Messvorrichtung in Sensorelement aufweist, welches das Einnehmen der Messkörper-Parkposition eines Messkörpers (1; 2, 2') signalisiert.

## Claims

1. Measurement apparatus for determining the relative displacement between two components (10, 20) in a direction z, comprising
- a first measurement body (1),
- a second measurement body (2, 2'), wherein
the first measurement body (1) is attachable to a first component (10) and the second measurement body (2, 2') is attachable to a second component (20) in each case such that movements having a direction component that is parallel to the direction z are transferable from one of the components (10, 20) to the measurement body (1; 2, 2') that is attached thereto, and
- a sensor device (3) for determining the relative position of the two measurement bodies (1; 2, 2'),
**characterized in that**
the first measurement body (1) and the second measurement body (2, 2') are configured such that they are attachable in each case to the first component (10) and the second component (20) at a rigid angle, wherein at least one of the measurement bodies (1; 2, 2') is configured such that it is capable of being brought into connective contact with the first component (10) or the second component (20), and
the measurement apparatus is transferable from a measurement apparatus park position, in which the measurement apparatus is decoupled from the components (10, 20), into a measurement apparatus operating position and has supports (1.4, 2.4, 4.1; 1.4', 2.4', 4.1') for at least one measurement body (1; 2, 2'), and is also configured such that the at least one measurement body (1; 2, 2') can optionally assume a measurement body park position or a measurement body operating position, in which the at least one measurement body (1; 2, 2') is not guided inside the measurement apparatus during the measurement operation, wherein owing to the configuration of the supports (1.4, 2.4, 4.1; 1.4', 2.4', 4.1'), the measurement bodies (1; 2, 2') in the measurement body park position are reproducibly aligned exactly with respect to one another in the space.

2. Measurement apparatus according to Claim 1 or 2, **characterized in that** the first measurement body (1) and the second measurement body (2, 2') are configured such that they are attachable in each case to the first component (10) and the second component (20) such that, due to the attachment, forces (Fx, Fy, Fz) are transferable in all spatial directions and moments (Mx, My, Mz) are transferable about three mutually orthogonal axes (x, y, z).

3. Measurement apparatus according to one of the preceding claims, **characterized in that** both the first measurement body (1) and the second measurement body (2, 2') are configured such that they are capable of being brought into connective contact in each case with the first component (10) and the second component (20).

4. Measurement apparatus according to one of the preceding claims, **characterized in that** the first measurement body (1) and/or the second measurement body (2, 2') are configured such that the connective contact is releasable by way of a movement of the first or second component (10, 20) in a direction having a direction component that is parallel to the direction z.

5. Measurement apparatus according to one of the preceding claims, **characterized in that** the first measurement body (1) and/or the second measurement body (2, 2') has a magnet (1.1, 2.1) for attachment to the first and/or second component (10, 20).

6. Measurement apparatus according to one of the preceding claims, **characterized in that** the measurement apparatus has a housing (4) which at least partially surrounds both the first measurement body (1) and the second measurement body (2).

7. Measurement apparatus according to one of the preceding claims, **characterized in that** it has an optical sensor device (3) having a light source (3.2) and a photodetector (3.6) for the determination of the relative position of the two measurement bodies (1; 2, 2').

8. Measurement apparatus according to Claim 8, **characterized in that** one structured element (3.4, 3.4¹, 3.4², 3.4³; 3.5¹, 3.5², 3.5³; 3.5⁴, 3.5⁵) is attached in each case to the first measurement body (1) and to the second measurement body (2, 2'), wherein the structured elements (3.4, 3.4¹, 3.4², 3.4³, 3.5, 3.5¹, 3.5², 3.5³, 3.5⁴, 3.5⁵) are able to be illuminated by light source (3.2) so that the light beams modulated by the structured elements (3.4¹, 3.4², 3.4³; 3.5, 3.5¹, 3.5², 3.5³; 3.5⁴, 3.5⁵) can be converted by the photodetector (3.6) into electrical signals which depend on the relative position of the two measurement bodies (1; 2,2').

9. Measurement apparatus according to Claim 9, **characterized in that** the electrical signals are usable for determining the relative position of the two measurement bodies (1; 2, 2') both in the direction z and in a further direction x that is orthogonal to the direction z.

10. Measurement apparatus according to Claim 9 or 10, **characterized in that** at least one structured element (3.4¹, 3.4², 3.4³; 3.5¹, 3.5², 3.5³; 3.5⁴, 3.5⁵) has two regions, wherein the grating structures in at least one region are inclined relative to the direction z.

11. Measurement apparatus according to Claim 11, **characterized in that** the grating structures are oriented such that they have a component in the direction z.

12. Measurement apparatus according to Claim 11, **characterized in that** the grating structures are arranged in a geometric plane that is located in the space obliquely with respect to the direction z.

13. Measurement apparatus according to one of Claims 11 to 13, **characterized in that** at least one structured element (3.4¹, 3.4², 3.4³; 3.5¹, 3.5², 3.5³: 3.5⁴, 3.5⁵) has two regions, wherein the grating structures in the different regions are oriented in a complementary fashion.

14. Measurement apparatus according to Claim 14, **characterized in that** the grating structures in the different regions are arranged to be symmetrical with respect to one another.

15. Measurement apparatus according to one of Claims 9 to 15, **characterized in that** the measurement apparatus has two sensor devices (3) for correcting the relative position of the two measurement bodies (1; 2, 2') with respect to a displacement that is orthogonal to the direction z.

16. Measurement apparatus according to one of Claims 8 to 16, **characterized in that** the measurement apparatus has a housing (4) which has a light-proof design.

17. Measurement apparatus according to one of the preceding claims, **characterized in that** the measurement apparatus has a sensor element which signals the assuming of the measurement body park position of a measurement body (1; 2, 2').

## Revendications

1. Dispositif de mesure destiné à déterminer le décalage relatif entre deux composants (10, 20) dans une direction z, comprenant
- un premier corps de mesure (1),
- un deuxième corps de mesure (2, 2'),
le premier corps de mesure (1) pouvant être fixé à un premier composant (10) et le deuxième corps de mesure (2, 2') à un deuxième composant (20) à chaque fois de telle sorte que les mouvements dans une composante directionnelle parallèle à la direction z peuvent être transmis de l'un des composants (10, 20) au corps de mesure (1 ; 2, 2') qui y est fixé, et
- un dispositif de détection (3) destiné à déterminer la position relative des deux corps de mesure (1 ; 2, 2'),
**caractérisé en ce que**
le premier corps de mesure (1) et le deuxième corps de mesure (2, 2') sont configurés de telle sorte qu'ils peuvent respectivement être fixés au premier composant (10) ou au deuxième composant (20) en une position angulaire fixe, au moins l'un des corps de mesure (1 ; 2, 2') étant configuré de telle sorte que celui-ci peut être amené en contact d'adhérence avec le premier composant (10) ou le deuxième composant (20), et
le dispositif de mesure peut être transféré d'une position de stationnement du dispositif de mesure, dans laquelle le dispositif de mesure est désaccouplé des composants (10, 20), en une position opérationnelle du dispositif de mesure et possède des supports (1.4, 2.1, 4.1 ; 1.4', 2.4', 4.1') pour au moins un corps de mesure (1 ; 2, 2'), et est ici configuré de telle sorte que l'au moins un corps de mesure (1 ; 2, 2') peut adopter, au choix, une position de stationnement de corps de mesure ou une position opérationnelle de corps de mesure, dans laquelle l'au moins un corps de mesure (1 ; 2, 2') est non guidé à l'intérieur du dispositif de mesure pendant le fonctionnement en mesure, la configuration des supports (1.4, 2.1, 4.1 ; 1.4', 2.4', 4.1') permettant d'orienter mutuellement avec précision, et de manière reproductible dans l'espace, les corps de mesure (1 ; 2, 2') se trouvant dans la position de stationnement de corps de mesure.

2. Dispositif de mesure selon la revendication 1 ou 2, **caractérisé en ce que** le premier corps de mesure (1) et le deuxième corps de mesure (2, 2') sont configurés de telle sorte que ceux-ci peuvent être fixés respectivement au premier composant (10) ou au deuxième composant (20) de manière à ce que la fixation permet de transmettre les forces (Fx, Fy, Fz) dans toutes les directions de l'espace et les moments (Mx, My, Mz) autour de trois axes (x, y, z) respectivement orientés de façon orthogonale les uns par rapport aux autres.

3. Dispositif de mesure selon l'une des revendications précédentes, **caractérisé en ce que** le premier corps de mesure (1) ainsi que le deuxième corps de mesure (2, 2') sont configurés de telle sorte que ceux-ci peuvent être amenés en contact d'adhérence respectivement avec le premier composant (10) ou avec le deuxième composant (20).

4. Dispositif de mesure selon l'une des revendications précédentes, **caractérisé en ce que** le premier corps de mesure (1) et/ou le deuxième corps de mesure (2, 2') sont configurés de telle sorte que le contact d'adhérence peut être détaché par un mouvement du premier ou du deuxième composant (10, 20) dans une direction ayant une composant directionnelle parallèle à la direction z.

5. Dispositif de mesure selon l'une des revendications précédentes, **caractérisé en ce que** le premier corps de mesure (1) et/ou le deuxième corps de mesure (2, 2') possèdent un aimant (1.1, 2.1) servant à la fixation au premier ou au deuxième composant (10, 20).

6. Dispositif de mesure selon l'une des revendications précédentes, **caractérisé en ce que** le dispositif de mesure possède un boîtier (4) qui entoure au moins partiellement à la fois le premier corps de mesure (1) et le deuxième corps de mesure (2).

7. Dispositif de mesure selon l'une des revendications précédentes, **caractérisé en ce que** pour déterminer la position relative des deux corps de mesure (1 ; 2, 2'), celui-ci possède un appareil de détection optique (3) doté d'une source de lumière (3.2) et d'un détecteur photoélectrique (3.6).

8. Dispositif de mesure selon la revendication 8, **caractérisé en ce qu'**un élément structuré (3.4, 3.4¹, 3.4², 3.4³, 3.5¹, 3.5², 3.5³, 3.5⁴, 3.5⁵) est à chaque fois fixé au premier corps de mesure (1) et au deuxième corps de mesure (2, 2'), les éléments structurés (3.4, 3.4¹, 3.4², 3.4³ , 3.5¹, 3.5², 3.5³, 3.5⁴, 3.5⁵) pouvant être éclairés par la source de lumière (3.2) de telle sorte que les rayons lumineux modulés par les éléments structurés (3.4¹, 3.4², 3.4³, 3.5¹, 3.5², 3.5³, 3.5⁴, 3.5⁵) peuvent être convertis par le détecteur photoélectrique (3.6) en signaux électrique qui dépendent de la position relative des deux corps de mesure (1 ; 2, 2').

9. Dispositif de mesure selon la revendication 9, **caractérisé en ce que** les signaux électriques peuvent être utilisés pour déterminer la position relative des deux corps de mesure (1 ; 2, 2') à la fois dans la direction z et dans une autre direction x, orthogonale par rapport à la direction z.

10. Dispositif de mesure selon la revendication 9 ou 10, **caractérisé en ce qu'**au moins un élément structuré (3.4¹, 3.4², 3.4³, 3.5¹, 3.5², 3.5³, 3.5⁴, 3.5⁵) possède deux zones, les structures en grille étant inclinées par rapport à la direction z dans au moins une zone.

11. Dispositif de mesure selon la revendication 11, **caractérisé en ce que** les structures en grille sont orientées de telle sorte que celles-ci présentent un composant dans la direction z.

12. Dispositif de mesure selon la revendication 11, **caractérisé en ce que** les structures en grille sont disposées dans un plan géométrique qui est oblique par rapport à la direction z dans l'espace.

13. Dispositif de mesure selon l'une des revendications 11 à 13, **caractérisé en ce qu'**au moins un élément structuré (3.4¹, 3.4², 3.4³, 3.5¹, 3.5², 3.5³, 3.5⁴, 3.5⁵) possède deux zones, les structures en grille étant orientées de manière complémentaire dans les différentes zones.

14. Dispositif de mesure selon la revendication 14, **caractérisé en ce que** les structures en grille sont disposées de manière symétrique les unes par rapport aux autres dans les différentes zones.

15. Dispositif de mesure selon l'une des revendications 9 à 15, **caractérisé en ce que** le dispositif de mesure possède deux appareils de détection (3) destinés à corriger la position relative des deux corps de mesure (1 ; 2, 2') du point de vue d'un décalage orthogonal à la direction z.

16. Dispositif de mesure selon l'une des revendications 8 à 16, **caractérisé en ce que** le dispositif de mesure possède un boîtier (4) qui est réalisé opaque.

17. Dispositif de mesure selon l'une des revendications précédentes, **caractérisé en ce que** le dispositif de mesure possède un élément de détection qui signale l'adoption de la position de stationnement de corps de mesure par un corps de mesure (1 ; 2, 2').
